# EUROPEAN PATENT APPLICATION

(11) **EP 0 613 096 A2**
(43) Date of publication of application: **31.08.1994**
(21) Application number: 94200319.5
(22) Date of filing: 09.02.1994
(51) Int. Cl.: G06F 15/403

(54) **Network disseminated multimedia text and photo image viewing on standard personal computers**

(30) Priority: 23.02.1993 US 21380
(71) Applicant: International Business Machines Corporation, Armonk, N.Y. 10504 (US)
(72) Inventor: Chernock, Richard Steven, Newton, Connecticut 06470 (US); Dauerer, Norman Joseph, Hopewell Junction, NY 12533 (US); Kelley, Edward Emile, Wappingers Falls, NY 12590 (US)
(74) Representative: Louet Feisser, Arnold

(57) **Abstract**

The system and process involves a multimedia display system for displaying a file such as a defect file with defect data and also the graphic data which shows an electronic picture of the defect on a computer monitor. The system simplifies the updating of a menu, defect description files, and photos by means of a seamless interface between a host computer and the personal computers used as terminals by the users. A host based system provides defect descriptions and data distribution together with the capability of viewing high resolution photos on a personal computer via a seamless interface between it and the host which provides access through use of the personal computer to the defect description file on the host and to the photo reference on the host.

## Description

This invention relates to data processing networks and more particularly to multimedia display of graphic and text information in a data processing system.

Multimedia as employed herein refers to the use of different forms of communication (media) within a computer setting: including text, and images (photographs) as well as video, audio, etc.

There has been an ongoing problem of describing semiconductor and substrate component defects using electronic media. Written descriptions are not adequate to describe the immense variety of visually identifiable defects. Terminals connected to a host computer are typically capable of displaying only line drawings, which are insufficient to describe the defects in such components accurately.

What is needed is the capability of rapidly viewing a detailed, clear, high resolution picture of the defect that is being described verbally.

Current solutions to this problem require special stand-alone equipment to view the photos, with nothing that combines a host based computer system of written descriptions of defects with photos that are viewable on off-the-shelf personal computers.

"Providing the Ability for PS/2 Users to View Photo Images Through the Intersite Line Comparison System", IBM Technical Disclosure Bulletin, Vol. 34, No. 6, p. 140 (Nov. 1991) describes a photo imaging system for use in connection with the above ILC system where each photo is treated separately, and which can be viewed independently.

An object of this invention is to simplify the process of updating the menu, the defect description files, and the photos by means of a seamless interface between the host and the personal computer. In accordance with this invention a host based system provides defect descriptions and data distribution together with the capability of viewing high resolution photos on a personal computer via a seamless interface between it and the host which provides access through use of the personal computer to the defect description file on the host and to the photo reference on the host.

As employed herein the term "host" may refer to a server or mainframe CPU.

As employed herein, the term "seamless" refers to a sequence of steps as follows:
1. the user loads an image into a directory on the PC hard drive
2. On the host the user consults the defect definition file while editing,
3. The user moves the cursor to photo name and hits a function key F2. As a result without issuing any upload commands or any data base transaction commands, the system will upload the image to host, built the data base transactions, distribute to different data bases, and load it onto the data bases. There is no need to toggle to the PC and figure out where it must go, as in the past.

The foregoing and other aspects and advantages of this invention are explained and described below with reference to the accompanying drawings, in which:
FIG. 1 which shows a computer system in accordance with an embodiment of this invention.
FIG. 2 illustrates the operation of the system for viewing a display of the defect descriptions and the photos.
FIGS. 3A-3D are flowcharts of the operation of the Update Section of the system of this invention.
FIGS. 4A-C are flowcharts of the operation of View Section of the system.
FIG. 5 shows the screen of a CPU operation for general viewing by general users of the system of this invention for viewing defect descriptions and displaying related photographs.
FIG. 6 shows the screen of the screen manager program which can be used to upload and delete the defect descriptions and photographs.

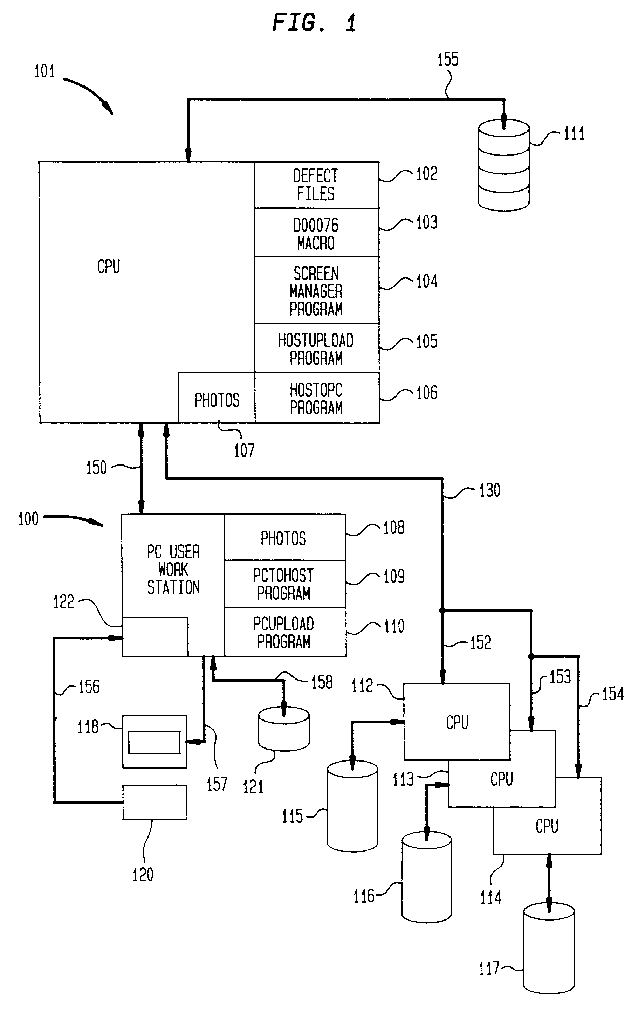

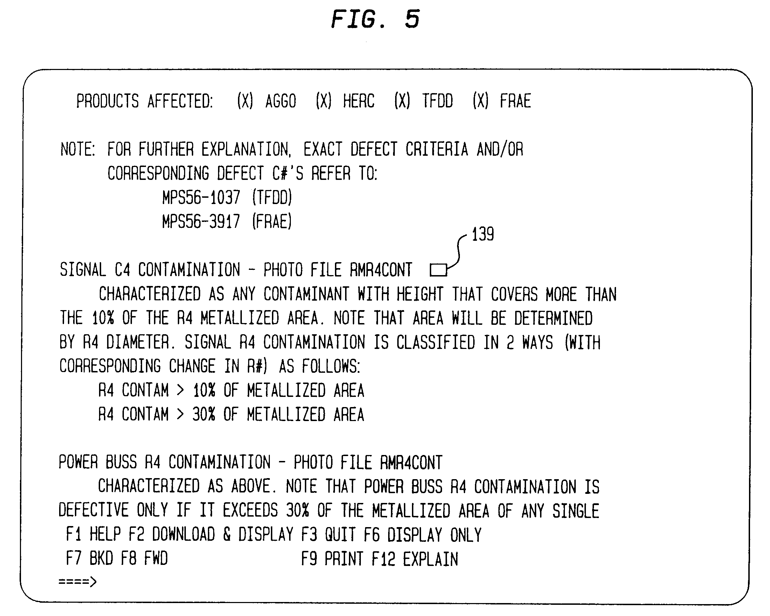

Referring to FIG. 1 which shows a computer system in accordance with an embodiment of this invention. The system includes a CPU 101 connected by link 155 to a central disk drive storage unit 111, and by a link 150 to a Personal Computer (PC) user work station 100. The PC station 100 is connected by link 157 to a display monitor 118, by link 156 to a keyboard 120 and by link 158 to a disk storage unit 121. The system updates, distributes, and provides viewing capability for a menu of defect description data files, together with the capability of viewing images or photos in the form of high resolution color photos which are described in the defect description. One views a desired photo on the monitor 118 by placing the cursor 139 in FIG. 5 on the reference (RMR4CONT) and pressing a function key F2 on the keyboard 120. FIG. 5 shows the screen of a CPU operation for general viewing by general users of the system of this invention for viewing defect descriptions and displaying related photographs. The photo information is fed to the user's personal computer 100 and is displayed using the capabilities of the personal computer, seamlessly, i.e. without needing intervention by the user(s). The high resolution photo images are viewed without any special hardware except for an off-the-shelf personal computer 100 and monitor 118.

This invention is a host based system that updates, distributes, and provides viewing capability for defect description files, photos of the described defects, and a menu of the defect description files to a network 130 connected to links 152, 153 and 154 to computers 112, 113, 114, etc. The defect definition files describe component defects and have references to manufacturing process specifications, process visual aids (which are image files that are part of the process specifications), and high resolution color photos of the actual defects.

Now the operation is repeated to clarify some of the details of the viewing operation. One views the referenced photos by placing the cursor 139 of the screen of FIG. 5 on monitor 118 to select one of the reference photo identifiers (labeled Photo File RMR4CONT) and pressing one of two possible functions keys F2 and F6. One can view the defect descriptions and photos by using the F2 function key to download and display the photo to the personal computer. The other function key F6 permits the user to display the photo directly on the personal computer (if the photo was previously downloaded). A file maintenance scheme is also included, i.e., after viewing the file the viewer is given the option of retaining the photo on the personal computer hard disk 121 or erasing the photo from the hard disk 121. To repeat, the high resolution photo images are viewed without any special hardware except for the PC 100.

A TSR (terminate and stay resident) program is loaded into the users PC (personal computer) 100, which allows a host program to place commands into the personal computer keyboard buffer 122 in PC 100 for keyboard 120. These commands are executed seamlessly, as if the user had typed them. The downloading of the image data is initiated in this fashion, as is the display of the photo image. A program is used which displays common image formats on any personal computer. Auto-sensing of display adapters provides the best possible quality of image (consistent with hardware).

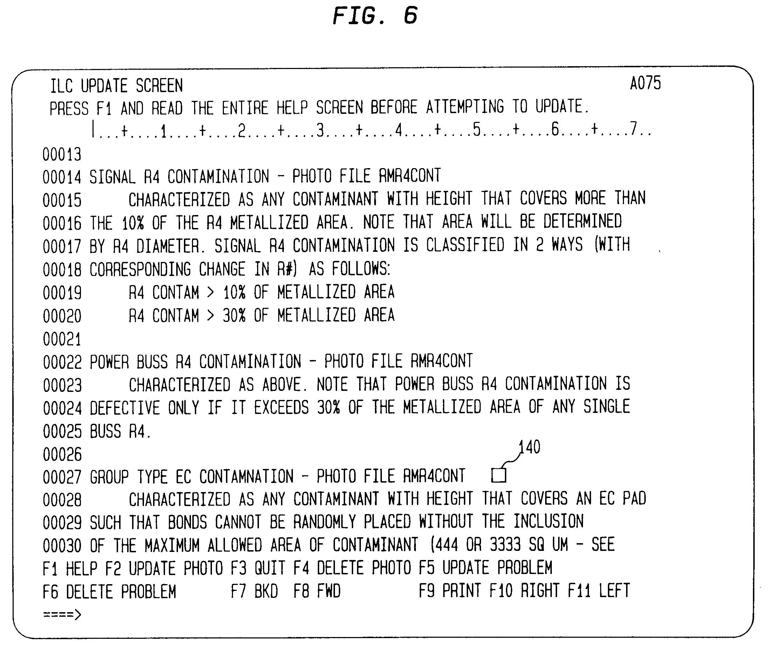

The invention also greatly simplifies the update process for the menu, defect description files, and the photos by means of a seamless interface between operations of the host 101 and the personal computer 100. When in the update mode (FIG. 6), an authorized user selects the particular option to be updated in the same manner as in the view mode (FIG. 5.) The user can then change the menu and press a function key to send the revised menu to the network 130. While in the update mode, the user can select any defect description file from the menu and make changes to the file.

Similarly, a photo can be loaded into the host network 130 from the personal computer 100 by entering the name of the photo anywhere in the defect description file and then pressing a function key on keyboard 120. The photo is uploaded to the host and distributed to the network 130. The details of this process are as follows:
1. The user enters the name of the photo anywhere in the defect description file.
2. The user then presses a function key F2. 3. The user is asked to select the file type of the file.
3. The photo is uploaded to the host.
4. The photo is distributed to the network 130, immediately.
5. If desired, deletion of the photo from the CPU's 112, 113, and 114, etc. connected to the host network 130 is accomplished by placing the cursor on the appropriate photo name and pressing the F4 function key.

The process described below deals with defects in a product line being manufactured with products which have occasional defects. There is a list of defects and documents which describe the defects as well as electronic images of the devices which have defects in them.
1. The user at the PC work station 100 requests a list of defects by operation of the keyboard 120.
2. The host CPU 101 (central processing unit) loads into its memory the D00076 macro program 103, the screen manager program 104, the HOSTUPLOAD program 105, and the HOSTOPC program 106 from a central storage unit 111.
3. The user at the PC work station 100 starts the PCTOHOST program 109 which is a TSR (terminate and stay resident) program.
4. The user at station 100 uses the monitor 118 and keyboard 120 to invoke the screen manager program 104 resident in CPU 101 (FIG. 1) with the screen shown in FIG. 6 to select a defect to describe to cause the defect file 102 to be loaded from central storage unit 111, if it is an existing file. FIG. 6 shows the screen of the screen manager program which can be used to upload and delete the defect descriptions and photographs. The cursor 140 of the screen in FIG. 6 is placed next to an item as indicated by the example of the item on line 00027 as shown. Alternatively, if the defect is a new one then the user creates a new file on the CPU 101. The user then enters, changes or adds to the defect description. The file name of each of the photos is entered free form in the defect description file.
5. Whenever the user wishes to upload a photo from a station 100 to the CPU 101 to distribution network 130, the user moves the cursor 140 on the display monitor 118 to the name of the photo and presses function key F2 (Update Photo) of the screen manager program 104, as illustrated in FIG. 6.
6. That action of key F2 triggers the D00076 macro program 103 to identify the photo that is being pointed to by the cursor 140 and then the CPU 101 issues an instruction to the HOSTOPC program 106 to send an instruction to the PC work station 100 to upload the photo. The PCTOHOST program 109 will receive the instruction and place the instruction in the PC work station keyboard buffer 122. The PCUPLOAD program 110 uploads the photo to the CPU 101. The HOSTUPLOAD program 105 in CPU 101 receives the uploaded photo file.
7. The D00076 macro program 103 presents a list of file type choices for the photo. The user selects the file type. The photo is then loaded into the CPU 101 with the selected file type and then sent to the central storage unit 111. The photo(s) is also sent to other CPUs in the network 130, 112, 113, 114 , etc. which then update the central storage unit 115, 116, 117, etc. associated with the corresponding one of those CPU's.
8. Whenever it is desired, the user presses function key F5 on the keyboard 120 when the ILC update screen of FIG. 6 is on display monitor 118 for editing. Pressing key F5 updates the entire description file. This also simultaneously, and seamlessly moves a copy of the data to the central storage unit 111 and to the other CPUs in the network 130, 112, 113, 114, etc. which then updates the central storage units 115, 116, 117, etc. associated with each CPU.
9. Whenever the user wishes to delete a photo from the central storage unit 111 and the distribution network 130, the user moves the cursor to the name of the photo and presses function key F4 in FIG. 6.
10. This action triggers the D00076 macro program 103, to identify the photo that is being pointed to by the cursor and then issues an instruction to the CPU 101 program which calls the D00076 macro program 103 to delete the photo from the central storage unit 111 and to the other CPUs in the network 130, 112, 113, 114 , etc. each of which then deletes the central storage units 115, 116, 117, etc. associated with the corresponding CPU.
11. Whenever the user wishes to delete a defect description from the central storage unit 111 and the distribution network 130, the user presses function key F6 in FIG. 6.
12. This action triggers the D00076 macro program 103, to issue an instruction to the CPU 101 program which calls the D00076 macro program 103 to delete the defect description from the central storage unit 111 and to the other CPUs in the network 130, 112, 113, 114, etc. which then deletes defect description in the central storage units 115, 116, 117, etc. associated with each CPU.

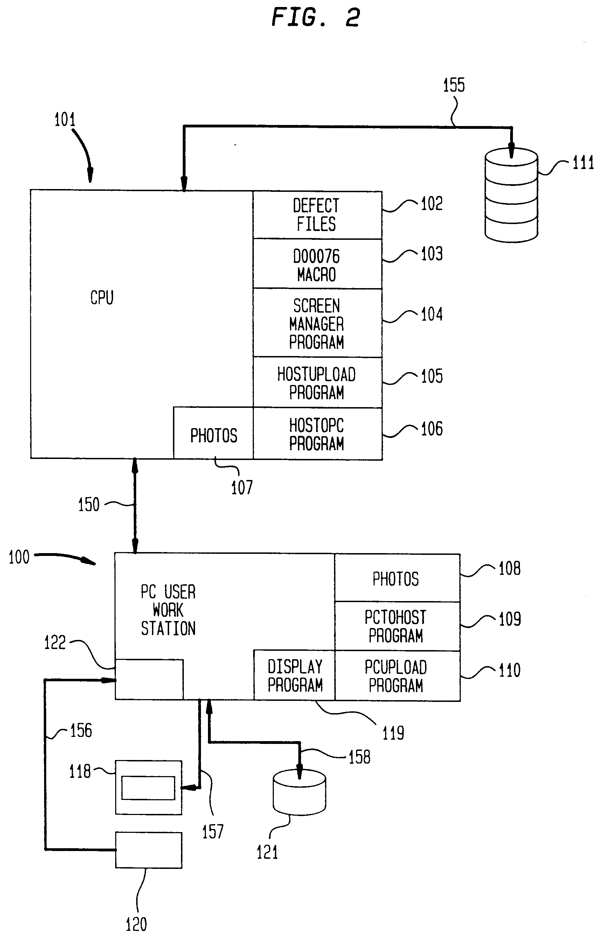

FIG. 2 illustrates the operation of the system for viewing a display of the defect descriptions and the photos which operates as follows:
1. The user at the PC work station 100 requests a list of files on product defects.
2. The host CPU 101 (central processing unit) loads the D00076 macro program 103, the screen manager program 104, the HOSTUPLOAD program 105, and the HOSTOPC program 106 from a central storage unit 111.
3. The user at the PC work station 100 starts the PCTOHOST program 109 which is a TSR (terminate and stay resident program).
4. The user invokes the screen manager program 104 to select a defect to view which will cause a defect file to be loaded from central storage 111 into defect file memory 102.
5. Referring to FIG. 5, whenever the user wishes to view a photo, the user moves the cursor to the name of the photo on the display monitor 118 and presses function key F2 to download and view or presses function key F6 to view only.
6. If function key F2 is pressed this action triggers the D00076 macro program 103, to identify the photo that is being pointed to by the cursor on the screen in FIG. 5 and then issues an instruction to the HOSTOPC program 106 to send an instruction to the user PC work station 100 to download the photo. The PCTOHOST program 109 receives the instruction and places the instruction in the PC work station keyboard buffer 122. The PCUPLOAD program 110 issues an instruction to the CPU 101 and the HOSTUPLOAD program to download the photo. The PCUPLOAD program 110 receives the downloaded photo file.
7. The display program 119 then displays the photo on the display monitor 118 of workstation 100. After the display is ended referring to the screen in FIG. 5, the user is given a choice of keeping the photo in the work-station photo storage 108 or deleting the photo by giving a YES answer to a computer question presented on the screen of the display monitor 118.
8. If function key F6 is pressed this action triggers the D00076 macro program 103, to identify the photo that is being pointed to by the cursor and then issues an instruction to the HOSTOPC program 106 to send an instruction to the user PC work station 100 to invoke the display program 119 to display the photo on display monitor 118 to give the user a view of the photo which already exists on the PC work station 100. The PCTOHOST program 109 receives the instruction and place the instruction in the PC work station keyboard buffer 122.
9. The display program 111 then displays the photo on the display monitor 118. After the display is ended the user is given a choice of keeping the photo in the storage of the work-station 100 or deleting the photo.

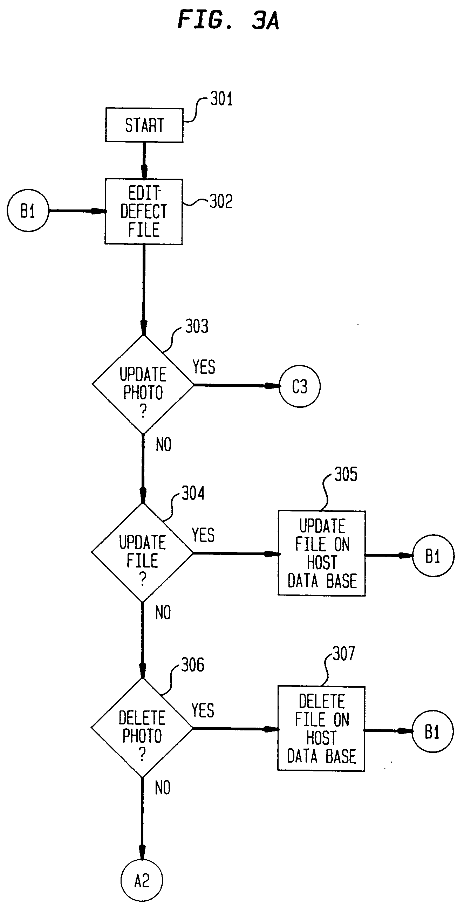

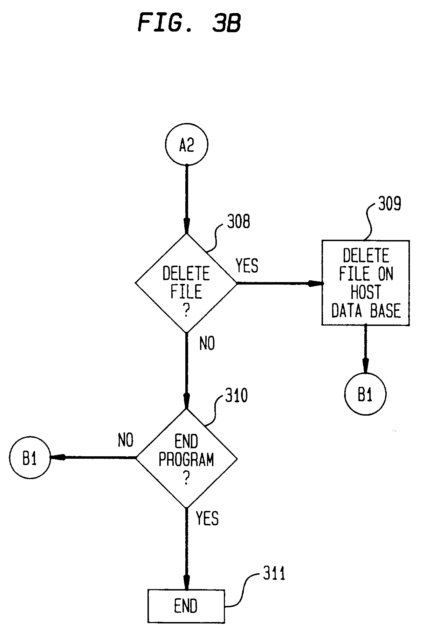

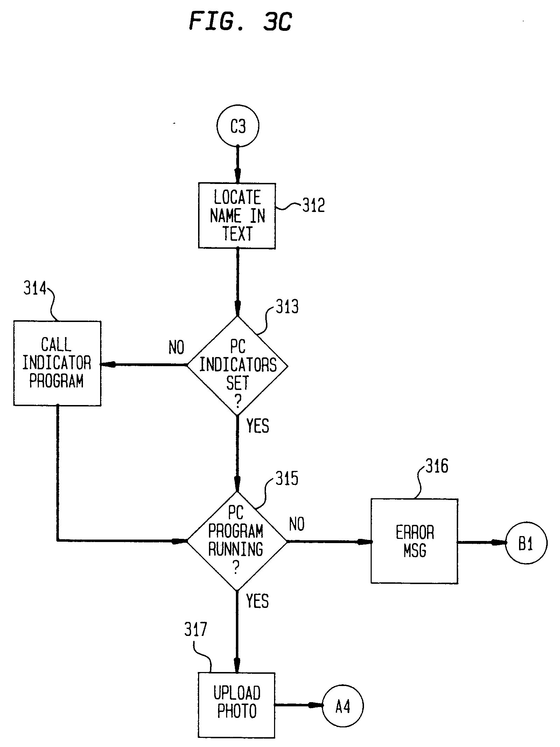

FIGS. 3A-3D are flowcharts of the Update Section of the system of this invention. The operations performed in FIG. 3A are as follows:
- OPERATION: 301 Start the update section.
- OPERATION: 302 Edit the defect description file. This function is performed at the host. The system presents a list of description files. One is selected and placed in a screen that allows editing and hypertext function keys that allow:
- F2: Place the cursor on the photo name and upload from the PC to the host and distribute to host data bases.
- F4: Place the cursor on the photo name and delete the photo from the host data bases.
- F5: Update the defect description file to the host data bases.
- F6: Delete the defect description file from the host data bases.
- OPERATION: 303 Is this a request to update the photo?
If YES, branch to C3 in FIG. 3C, described below.
If NO, go to OPERATION 304.
- OPERATION: 304 Is this a request to update the defect description file on the host data base?
If YES, go to OPERATION 305.
If NO, go to OPERATION 306.
- PERATION: 305 Update the defect description file on the host data base and distribute to all other shadowed host data bases. The user need not supply any information other than pressing the appropriate function key. The system builds the appropriate data base commands and sends the transaction to the correct destination. Then branch again to B1 to OPERATION 302 above.
- OPERATION: 306 Is this a request to delete the photo from the host data bases? If YES, go to OPERATION 307 below. If NO, branch to A2 in FIG. 3B.
- OPERATION: 307 Delete the photo file on the host data base and all other shadowed host data bases. The user need not supply any information other than pressing the appropriate function key. The system builds the appropriate data base commands and sends the transaction to the correct destination. Then branch again to B1 to OPERATION 302 above.

FIG. 3B shows additional operations of the update section as follows:
- OPERATION: 308 Is this a request to delete the defect description file?
If YES, go to OPERATION 309 below.
If NO, go to OPERATION 310 below
- OPERATION: 309 Delete the defect description file on the host data base and all other shadowed host data bases. The user need not supply any information other than pressing the appropriate function key. The system builds the appropriate data base commands and sends the transaction the to correct destination. Then branch to B1 in FIG. 3A, once again.
- OPERATION: 310 Should the program end?
If NO, branch to B1 in FIG. 3A.
If YES, go to OPERATION 311.
- OPERATION: 311 End the program.

FIG. 3C shows additional operations of the update section as follows:
The access to the Operation 312 is a branch C3 from FIG. 3A from the update photo decision operation 303.
- OPERATION: 312 Locate the name in the text. After the user places the cursor on the photo name and presses function key F2 (Update Photo, see FIG. 6) , the system will locate the name of the photo in the text.
- OPERATION: 313 Are the PC indicators set. These indicators are lasting variables that need be set only once and are remembered between system logons. These indicators are the name of the PC operating system and the name of the directory that contains the PCTOHOST communication programs 109 and digitized photos. If NO, go to OPERATION 314, via B1 If YES, go to OPERATION 315
- OPERATION: 314 Call indicator program. If the PC indicators have not been set, the system calls a program which will present a screen that will request the PC indicators. After the PC indicators have been loaded, the system will store them as lasting variables.
- OPERATION: 315 Is the PCTOHOST communication program running at the PC?
If NO, branch to OPERATION 316.
If YES, go to OPERATION 317.
- OPERATION: 316 Display a error message that indicates the PC Host communication program is not running and instructions to get it running.
- OPERATION: 317 Upload photo. An instruction is sent from the Host to the PC to upload the photo file.

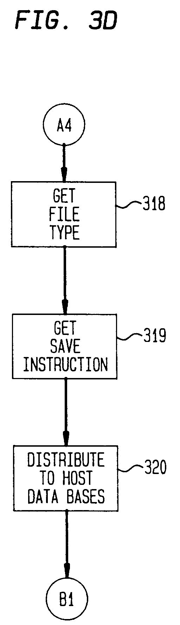

FIG. 3D shows the remaining operations of the update section as follows:
- OPERATION: 318 Get file type. The user selects the file type for the Host from a table.
- OPERATION: 319 Get save instruction. The responds whether to save the photo file on his Host userid.
- OPERATION: 320 Distribute to Host data bases. The system will update the photo file to the appropriate Host data base and distribute to any shadow data bases. The user need not supply any other information. The system builds the appropriate data base commands and sends the transaction to the correct destination.

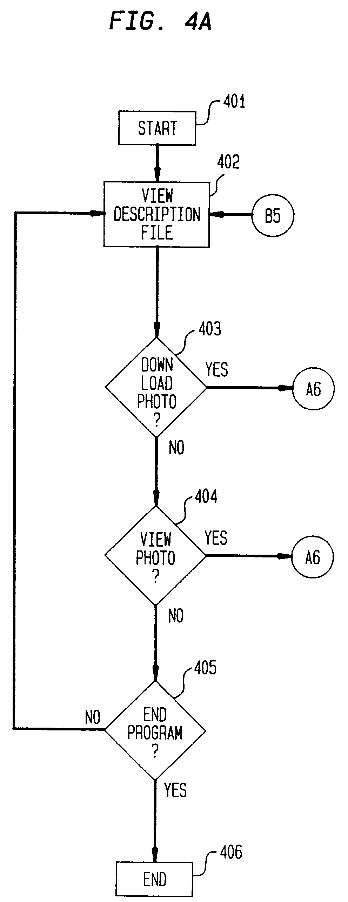

Referring to FIGS. 4A-C which are flowcharts of the operation of the View Section of the system. Referring to FIG. 4A, the operations performed by that portion of the system are as follows:
- OPERATION: 401 Start the view section. This section deals with viewing the data.
- OPERATION: 402 View the description file. The system presents a list of defect description files. One is selected for viewing. This function is performed at the Host and provides the following function keys.
- F2: Place the cursor on the photo name and down load from the PC to the host and view on the PC.
- F6: Place the cursor on the photo name from the host and view on the PC if the photo file is already on the PC.
- OPERATION: 403 Download photo. Is this a request to download the photo file from the Host data base and view the photo of the PC?
If YES, branch to OPERATION 407 via A6.
If NO, go to OPERATION 404.
- OPERATION: 404 View photo. Is this a request to view a photo file on the PC?
If YES, branch to OPERATION 407 via A6.
If NO, go to OPERATION 405.
- OPERATION: 405 Is this a request to end the program?
If NO, branch to OPERATION 402.
If YES, go to OPERATION 406.
- OPERATION: 406 End the program.

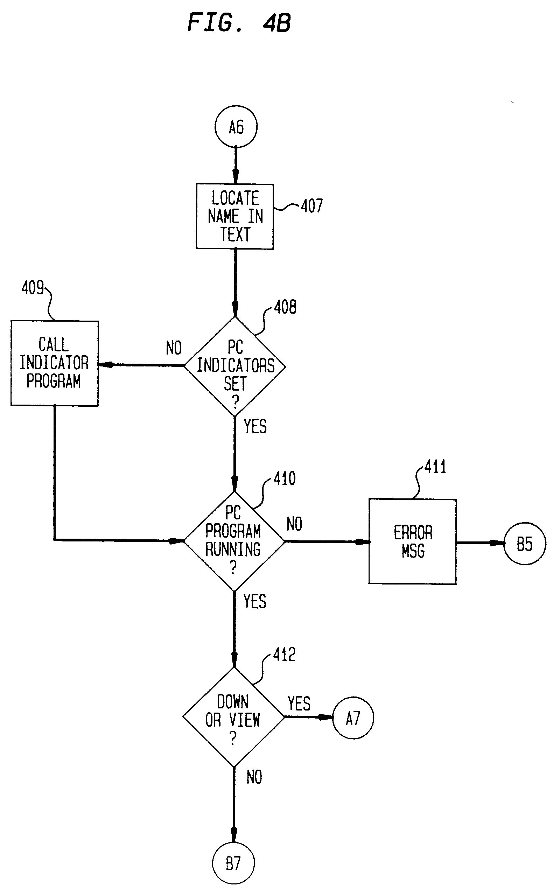

FIG. 4B shows additional operations of the View Section as follows:
- OPERATION: 407 Locate name in text. If function key F2 for download and view or function key F6 for view only has been pressed, then the system will locate the name of the photo that is over the cursor.
- OPERATION: 408 PC indicators set? These indicators are lasting variables that need be set only once and are remembered between system logons. These indicators are the name of the PC operating system and the name of the directory that contains the PCTOHOST communication programs and digitized photos.
If NO, branch to OPERATION 409.
If YES, go to OPERATION 410.
- OPERATION: 409 Call indicator program. Present a screen that asks the user to provide the PC indicators.
- OPERATION: 410 PC program running? An instruction is sent from the Host to the PC to inquire if the PCTOHOST communication program is running.
If NO, branch to OPERATION 411.
If YES, go to OPERATION 412.
- OPERATION: 411 Error msg. An error message is displayed indicating that the PCTOHOST program 109, which is a communication program is not running.
- OPERATION: 412 Down or view. Is this a request to down load from the Host and view at the PC or to view a photo that is described at the Host file but is already on the PC.
If YES, branch to OPERATION 413 via A7.
If NO, go to OPERATION 414 via B7.

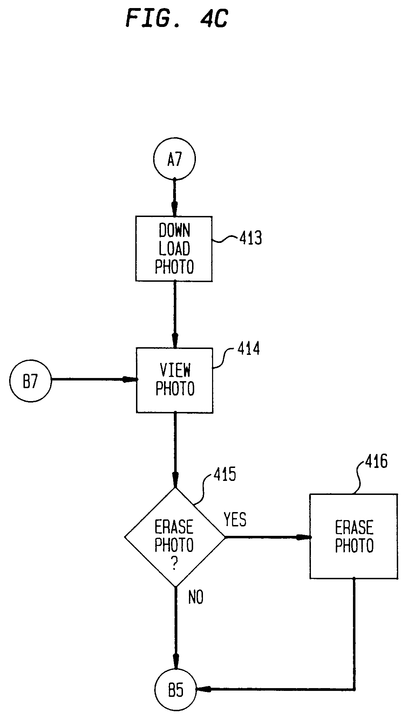

Referring to FIG. 4C, is a flowchart of the remaining functions of the system. The operations performed by that portion of the View section are as follows:
- OPERATION: 413 Send an instruction to the PC to issue the down load instruction from the PC to the Host.
- OPERATION: 414 Send an instruction to the PC to view the photo file.
- OPERATION: 415 Erase photo? Ask the user if the photo file should be erased from the PC hard drive.
If YES, branch to OPERATION 416.
If NO, go to OPERATION 402 via B5.
- OPERATION: 416 Erase photo. Erase the photo from the PC hard drive.

While this invention has been described in terms of the above embodiment(s), those skilled in the art will recognize that the invention can be practiced with modifications within the spirit and scope of the appended claims.

## Claims

1. A host based, multimedia, distributed processor data processing system including
a) a host,
b) defect description means for providing defect descriptions files on said host,
c) means for providing high resolution photographs on said host,
d) means for viewing said high resolution photographs on a workstation computer,
means for providing data distribution together with the capability via a seamless interface between said workstation and said host which provides access through use of said workstation computer to said defect description file on the host and to the photo reference on the host.

2. A host based, multimedia, distributed processor data processing system including
a) a host and a data processing work station storing an image file therein, said host storing a plurality of defect description files,
b) input means at said intelligent terminal whereby a user enters the identification of an image file anywhere in a said defect description file.
c) function selection means at said work station for reception of user entry of a function selection to said system,
d) means for uploading said image file to said host.

3. A system in accordance with claim 1 or 2 including a network of data processing devices linked to said host, and wherein operation of said function selection means to upload said image file to said host distributes said image file to the network.

4. A system in accordance with any of the preceding claims wherein deletion of the photo from said host and said network is accomplished by operation of another function selection means.

5. A system in accordance with any of the preceding claims wherein said host comprises a distributed network of host computers.
